Europäisches Patentamt

European Patent Office

Office européen des brevets

(19)

(11) Publication number: **0 304 968**

A1

(12) **EUROPEAN PATENT APPLICATION**

(21) Application number: **88201004.4**

(22) Date of filing: **19.05.88**

(51) Int. Cl.⁴: **B01D 33/04**

(30) Priority: **24.08.87 NL 8701978**

(43) Date of publication of application:
**01.03.89 Bulletin 89/09**

(84) Designated Contracting States:
**AT BE CH DE ES FR GB GR IT LI LU NL SE**

(71) Applicant: **B.V. Machinefabriek v/h Pannevis & Zn.**
**Elektronweg 24**
**NL-3542 AC Utrecht(NL)**

(72) Inventor: **Beens, Cornelis Arie**
**Johanna Westerdijkstraat 14**
**NL-2286 JB Rijswijk(NL)**

(74) Representative: **Noz, Franciscus Xaverius, Ir. et al**
**Algemeen Octrooibureau P.O. Box 645**
**NL-5600 AP Eindhoven(NL)**

(54) **Belt filtering device.**

(57) The invention relates to a belt filtering device provided with a frame, with an enless conveyor belt guided around drums and with at least one casing arranged under the upper part of the belt, in which casing a sub-atmospheric pressure can be generated for drawing liquid during operation from material present on the conveyor belt via holes provided in the conveyor belt for that purpose. The casing is pivotable relatively to the frame by means of a setting cylinder, between a first position suitable for operation, in which sealing means provided at the upper side of the casing bear against the bottom side of the upper part of the conveyor belt, and an open position, in which the casing is pivoted downwards in a direction remote from the conveyor belt. In the first position suitable for operation, the casing is thereby pressed upwards with a certain force against the bottom side of the upper part of the belt by means of the setting cylinder.

## Belt filtering device.

The invention relates to a belt filtering device provided with a frame, with an enless conveyor belt guided around drums and with at least one casing arranged under the upper part of the belt, in which casing a sub-atmospheric pressure can be generated for drawing liquid during operation from material present on the conveyor belt via holes provided in the conveyor belt for that purpose, whereby the casing is pivotable relatively to the frame by means of a setting cylinder, between a first position suitable for operation, in which sealing means provided at the upper side of the casing bear against the bottom side of the upper part of the conveyor belt, and an open position, in which the casing is pivoted downwards in a direction remote from the conveyor belt.

Such a belt filtering device is known from the US patent specification 4,080,298. In this known belt filtering device arms supporting the casing in the position suitable for operation are clamped against the frame by means of bolts, so that the casing cannot move up and down relatively to the belt during operation. However, when the device is being used there will be wear at the spot where the surfaces of the sealing means and the conveyor belt co-operate, as a result of which no effecting sealing can be ensured. The purpose of the invention is to meet this disadvantage of this known device.

According to the invention this can be achieved in that in the first position, suitable for operation, the casing is pressed upwards with a certain force against the bottom side of the upper part of the belt by means of the setting cylinder(s). When using the construction according to the invention the setting cylinder is not only used for pivoting the casing between the position suitable for operation and the open position, therefore, but it is also effected, by means of the setting cylinder, that a desired contact pressure is constantly maintained between the sealing means and the conveyor belt, as a result of which undesired leakages between the sealing means and the conveyor belt can be avoided, also after prolonged use of the device, which leakages may occur in the constructions usual so far, also due to the fact that the correct arrangement of the casing in the operating position is difficult to control.

It is noted that the US patent specification 4,080,298 relates to a device whereby the sealing means are fixed to the casing. It will be apparent, however, that it will also be possible to use the construction according to the invention in other belt filtering devices, e.g. a belt filtering device as described in the European patent application 017676, in which the sealing means have a pivoted connection with the casing.

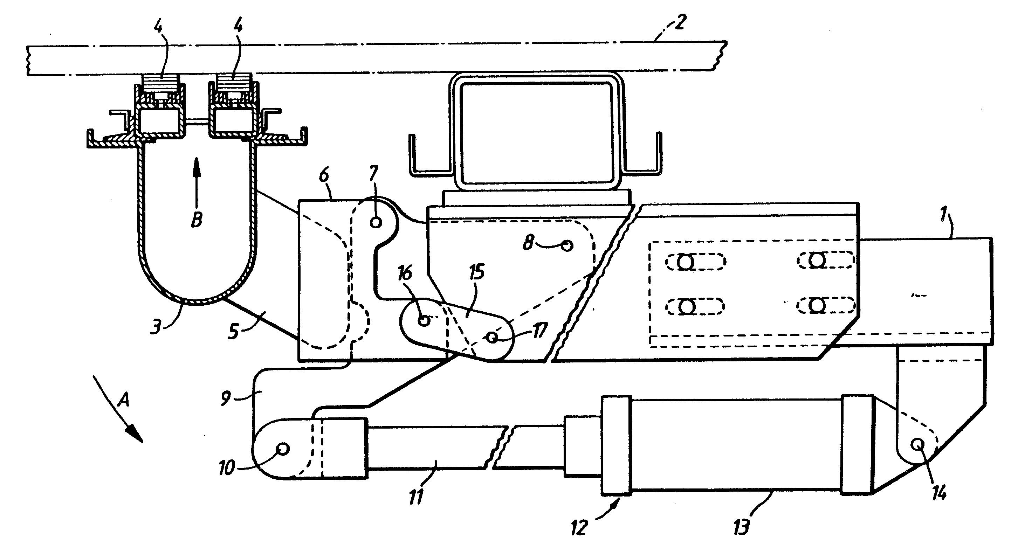

The invention will be further explained hereinafter with reference to a possible embodiment of the construction according to the invention diagrammatically illustrated in the accompanying figure, whereby the figure illustrates a part of the belt filtering device, partly in section and partly in view.

As is illustrated in the figure the belt filtering device comprises a frame 1 in which drums, not shown, are located, an endless belt 2 being guided around said drums. Under the belt there are arranged one or several casings 3, illustrated in section in the figure, whereby a sub-atmospheric pressure can be generated in said casing(s) by means of means not shown.

At the upper edge of a casing 3 there are provided sealing means 4, extending in the direction of movement of the belt 2, said sealing means bearing against the bottom side of the upper part of the belt 2 during operation. Said sealing means 4 thereby define a passage via which moisture can be drawn from material present on the conveyor belt 2, as is generally known and usual for belt filtering devices.

In the illustrated embodiment the casing 3 is fixed to a supporting plate 6 by means of an arm 5 fitted to the casing. Near its upper side, at the side remote from the casing 3, the supporting plate 6 is pivotally coupled, by means of a pin 7, to a mounting plate 9 which is pivotable relatively to the frame about a pin 8 extending parallel to the pin 7. One end of a piston rod 11 is pivotally coupled to the bottom end of the mounting plate 9, by means of a pin 10 extending parallel to the pin 8. The piston rod 11 forms part of a setting cylinder 12, and is fixed, with its end remote from the pivot pin 10, to a piston accommodated in a cylinder casing 13 of the setting cylinder 12. Said cylinder casing 13 is pivotally connected to the frame 1 by means of a pin 14 extending parallel to the pin 10. One end of a link 15 is furthermore pivotally coupled to the supporting plate 6 by means of a pin 16 extending parallel to the pin 7. The other end of the link is pivotally coupled to the frame 1 by means of a pin 17 extending parallel to the pin 16. The casing 3 can be pivoted, by means of the setting cylinder 12, from the position illustrated in the figure, in which the sealing means are located against the bottom side of the upper part of the conveyor belt 2, in the direction according to arrow A, into an inactive, open position, e.g. for maintenance and cleaning of the casing 3.

In the position illustrated in the figure the casing 3 is not fixed relatively to the frame, but a certain pressure is maintained in the cylinder casing 13 of the setting cylinder 12, so that the casing 3 is constantly pressed upwards with a certain force, in the direction according to arrow B, as a result of which sealing means 4 will continuously be pressed with force of desired magnitude against the bottom side of the upper part of the belt 2 during operation, and any wear that may occur will automatically be compensated, therefore, and have no influence on the intended good sealing between the sealing means and the conveyor belt. Because the casing 3 is not fixed to the supporting plate 9, but is coupled to the mounting plate 9 by the pivot pin 7 and is furthermore supported by the link 15, which is pivotally coupled both to the frame and to the casing 3, it is ensured, also because of the chosen location of the pivot axes, that the casing 3 moves at least substantially vertically along the path in which during normal operation the casing 3 is pressed upwards, according to arrow B, against the bottom side of the conveyor belt, so that it is ensured that the sealing means will stay well-butted against the bottom side of the upper part of the conveyor belt 2 in case of wear.

## Claims

1. Belt filtering device provided with a frame, with an endless conveyor belt guided around drums and with at least one casing arranged under the upper part of the belt, in which casing a sub-atmospheric pressure can be generated for drawing liquid during operation from material present on the conveyor belt via holes provided in the conveyor belt for that purpose, whereby the casing is pivotable relatively to the frame by means of a setting cylinder, between a first position suitable for operation, in which sealing means provided at the upper side of the casing bear against the bottom side of the upper part of the conveyor belt, and an open position, in which the casing is pivoted downwards in a direction remote from the conveyor belt, characterized in that in the first position, suitable for operation, the casing is pressed upwards with a certain force against the bottom side of the upper part of the belt by means of the setting cylinder.

2. Belt filtering device according to claim 1, characterized in that the casing is fixed to a supporting plate, which is pivotally coupled to a mounting plate which is pivotable, relatively to the frame, by means of the setting cylinder.

3. Belt filtering device according to claim 1, characterized in that between the supporting plate and the frame there is provided a link pivotally coupled both to the supporting plate and to the frame.

4. Belt filtering device according to claim 3, characterized in that the pivot axes about which the link is pivotable relatively to the supporting plate and to the frame, seen in the longitudinal direction of said pivot axes, are located between the pivot axis about which the supporting plate is pivotable and the pivot axis about which the mounting plate is pivotable relatively to the frame, when the casing is arranged in the first position.

5. Belt filtering device according to claim 4, characterized in that in the first position the pivot axis between the link and the supporting plate is located higher than the pivot axis between the link and the frame.

6. Belt filtering device as described hereinabove and/or illustrated in accompanying figures.

EP 0 304 968 A1